# EUROPÄISCHE PATENTSCHRIFT

(11) **EP 2 978 520 B1**
(45) Veröffentlichungstag und Bekanntmachung des Hinweises auf die Patenterteilung: **19.04.2017**
(21) Anmeldenummer: 14711494.6
(22) Anmeldetag: 18.03.2014
(51) Int. Cl.: B01J 2/10

(54) **VERFAHREN ZUR ERZEUGUNG EINES OPTIMIERTEN GRANULATS**
PROCESS FOR PRODUCING AN OPTIMIZED GRANULAR MATERIAL
PROCÉDÉ DE PRODUCTION D'UN GRANULAT OPTIMISÉ

(30) Priorität: 25.03.2013 DE 102013103013
(43) Veröffentlichungstag der Anmeldung: 03.02.2016
(73) Patentinhaber: Maschinenfabrik Gustav Eirich GmbH & Co. KG, 74736 Hardheim (DE)
(72) Erfinder: NOLD, Peter, 55457 Gensingen (DE)
(74) Vertreter: WSL Patentanwälte Partnerschaft mbB
(86) Internationale Anmeldenummer: PCT/EP2014/055385
(87) Internationale Veröffentlichungsnummer: WO 2014/154526

(56) Entgegenhaltungen:
- EP-A1- 2 236 551
- DE-A1- 1 935 893

## Beschreibung

Die vorliegende Erfindung betrifft ein Verfahren zur Erzeugung eines optimierten Granulates.

Bei der Herstellung von sphärischen Granulaten, insbesondere Granulaten mit Korngrößen von im Allgemeinen weniger als 1 mm, werden in der Regel thermische Granulationsverfahren eingesetzt. Hierbei werden gröbere Feststoffe mit einer großen Flüssigkeitsmenge versetzt und in Nassmühlen gemahlen.

Alternativ dazu werden feine Pulver mit Flüssigkeit zu einer Suspension vermischt. Diese wird anschließend in einem Sprühtrockner granuliert, wobei hierzu die Suspension über ein Düsensystem oder Schleuderscheiben in einer heißen Atmosphäre zerstäubt wird. Die entstehenden Tröpfchen werden im Trocknerraum durch heiße Luft, die im Gegenstrom zu den Tröpfchen geführt wird, getrocknet. Die in den Tröpfchen enthaltenen Partikel lagern sich zusammen und bilden Granulate. Die Restfeuchte und die Granulatgrößenverteilung lassen sich anhand der Düsengeometrie und Verfahrensparameter beeinflussen. Der Vorteil dieses seit Jahrzehnten etablierten Verfahrens liegt in der hohen Granulatausbeute im Bereich von 100 bis 800 µm. Nachteil dieses Verfahrens ist jedoch die für den Sprühvorgang hohe Flüssigkeitsmenge, die erst dem Feststoff zugeführt und anschließend wieder fast vollständig herausgetrocknet werden muss.

Für die Herstellung von Granulaten für keramische Fliesen ist es beispielsweise notwendig, die Materialien mit einer Feuchte von 35% zu versprühen, wobei eine Endfeuchte von nur 6% für die Weiterverarbeitung notwendig ist. Die Durchsatzleistung typischer Sprühtürme in dieser Anwendung beträgt zwischen 10 und 30 t pro Stunde.

Als weitere Alternative gibt es bereits das Verfahren der Feuchtgranulation in einem Granuliermischer. Im Granuliermischer wird die Trockenstoffmischung durch Zugabe von Flüssigkeit befeuchtet und anschließend werden unter Scherbeanspruchung und Ausbildung von Flüssigkeitsbrücken zwischen den Partikeln sphärische Granulate ausgebildet. In einem Granuliermischer ist ein Rührwerkzeug in einem Behälter angeordnet, wobei in einer besonderen Ausführungsform Behälter und Rührwerkzeug sich relativ zueinander drehen. Die für den Granuliervorgang notwendige Feuchte wird beispielsweise als pastöse Masse, als Suspension oder reine Flüssigkeit in Form eines Strahles oder über Düsen versprüht zugegeben und liegt deutlich unterhalb der Feuchte, die für einen Sprühvorgang in einem Sprühtrockner notwendig ist.

So liegt bei der Herstellung von Granulaten für keramische Fliesen der Feuchtigkeitsgehalt beim Versprühen auf einem Sprühturm bei ca. 35%, während er im Granuliermischer in der Regel bei ca. 11 bis 13%, das heißt bei etwa einem Drittel, liegt.

Dies führt zu erheblichen Kosteneinsparungen, da der Wasserverbrauch deutlich reduziert ist und daher die anschließend notwendige Trocknung schneller und sehr viel günstiger möglich ist.

Der Nachteil des Granuliermischverfahrens ist, dass abhängig von der Maschinengröße und den verwendeten Granulierwerkzeugen eine Granulatgrößenverteilung im Bereich von 0,1 bis 2 mm erzielt wird, während die Ausbeute an Granulaten im Bereich < 1 mm je nach Maschinentyp, -größe und Rohstoff mit 30 bis 60% im Vergleich zur Granulatherstellung im Sprühturm geringer ist.

Zusammenfassend ist daher festzustellen, dass die Granulaterzeugung im Granuliermischer zwar deutlich kostengünstiger ist, da wesentlich weniger Wasser verwendet wird, welches ansonsten aufwändig wieder entfernt werden muss, jedoch zugleich eine schlechtere Korngrößenverteilung bewirkt.

Daher ist es bereits üblich, die im Granuliermischer hergestellte Granulatgrößenverteilung nach der Erzeugung auf die gewünschte Endfeuchte zu trocknen und das Überkorn, d.h. das Korn mit Korngrößen oberhalb einer gewünschten Maximalgröße, abzutrennen und im getrockneten Zustand zu zerkleinern und in den Granuliermischer wieder zurückzuführen. Das Überkorn kann jedoch je nach Anwendung bei Granuliermischern einen Anteil zwischen 40 und 70% ausmachen, was bedeutet, dass etwa die Hälfte des Granulates nach der Erzeugung wieder zerkleinert und erneut dem Granuliermischer zugeführt wird. Dadurch geht ein Großteil der eingesparten Energie und Wassermenge wieder verloren, da nicht unerhebliche Granulatmengen den Prozess mehrfach durchlaufen.

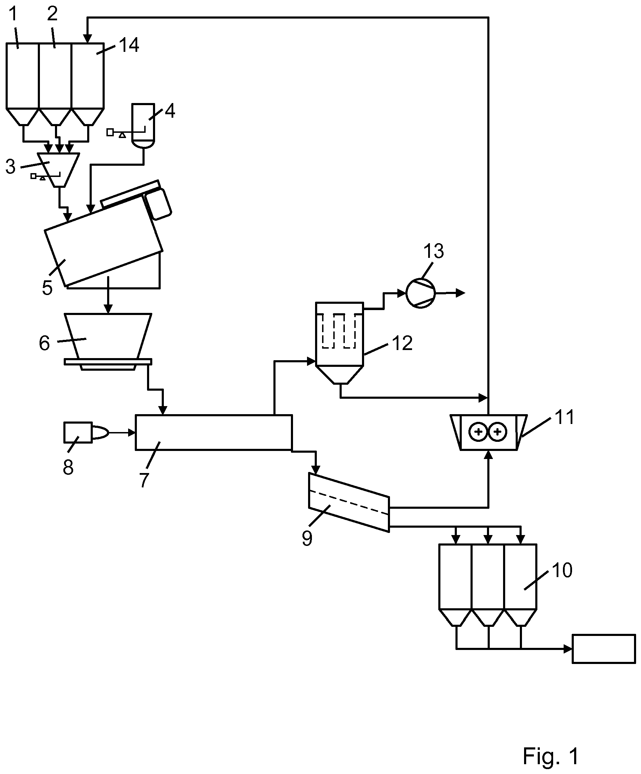

In Figur 1 ist ein schematischer Aufbau eines Verfahrens zur Erzeugung eines Granulates des Standes der Technik gezeigt. Die für die Herstellung des Granulates notwendigen Rohstoffe 1 und 2 werden über eine entsprechende Dosierwaage 3 in den Granuliermischer 5 zugegeben. Falls es erforderlich ist, kann über die Wasserzuführung 4 zusätzlich Wasser in den Mischer eingebracht werden. In dem Granuliermischer wird das entsprechende Granulat erzeugt, welches dann in einen Zwischenbehälter 6 abgeführt wird, der das erzeugte Granulat, welches eine Feuchte von etwa 12% aufweist, kontinuierlich auf einen Fließbetttrockner 7 austrägt, so dass das Granulat mittels Heißgaserzeuger 8 unter Zuführung von heißer Luft im Fließbetttrockner 7 auf eine Restfeuchte von 6% getrocknet wird. Die heiße Luft wird aus dem Fließbetttrockner 7 über den Filter 12 vom Abluftgebläse 13 angesaugt. Der Filter 12 dient dazu, Staubanteile abzusondern. Das getrocknete Granulat wird über den Klassierer 9 nach Größe getrennt, und das Überkorn über einen Brecher 11 zusammen mit dem vom Filter 12 stammenden Staub über das Rückgutsilo 14 wieder dem Granuliermischer zugeführt. Das Granulat mit der gewünschten Korngröße wird in die Behälter 10 zur Zwischenlagerung überführt und von dort für den weiteren Produktionsprozess entnommen.

Wie bereits ausgeführt, lässt sich durch die Verwendung des Granuliermischers zwar sehr energiesparend ein Granulat herstellen, aufgrund der ungünstigen Korngrößenverteilung ist es jedoch, insbesondere bei der Herstellung von Granulaten für keramische Fliesen, notwendig, dass etwa die Hälfte des Granulates als zerkleinertes Überkorn erneut dem Granuliermischer zugeführt werden muss, was dessen Durchsatz belastet und den Energieverbrauch wieder erhöht. Ausgehend von dem beschriebenen Stand der Technik ist es daher Aufgabe der vorliegenden Erfindung, ein Verfahren zur Erzeugung eines optimierten Granulates bereitzustellen, bei dem die gewünschte Granulatgrößenverteilung mit deutlich höherer Ausbeute und mit wesentlich reduziertem Energieaufwand erzielt werden kann.

Erfindungsgemäß wird diese Aufgabe gelöst durch die Schritte:
A) Erzeugen eines Granulates für die technische Keramik oder keramische Fliesen in einem Granuliermischer mit einem Behälter und einem im Behälter angeordneten Rührwerkzeug und
B) Zerkleinern zumindest eines Teils des Granulates in einem Granulatkonditionierer, welcher zwei sich relativ zueinander bewegende Elemente hat, wobei das Granulat durch einen Spalt zwischen den beiden Elementen geführt wird.

Dadurch, dass die Granulate durch den Spalt zwischen den beiden Elementen geführt werden, werden die Granulate, die zu groß sind, das sogenannte Überkorn, im Granulatkonditionierer zerkleinert, während die Granulate mit bereits geeigneter Korngröße durch den Spalt bewegt werden können, ohne dass sie weiter zerkleinert werden.

Versuche haben gezeigt, dass eine Zerkleinerung in dem erfindungsgemäßen Granulatkonditionierer besonders effektiv ist, wenn das Granulat eine Feuchte zwischen 10 und 15%, vorzugsweise zwischen 11 und 13,5% und am besten von 12 bis 13% hat. Bei der Erzeugung von Granulaten für die technische Keramik sind die genannten Feuchtigkeitsbereiche auch geeignete Feuchtigkeitsbereiche für das Erzeugen des Granulates im Granuliermischer, so dass in der Regel das aus dem Granuliermischer herausgeführte Granulat ohne notwendige Feuchtigkeitszugabe oder vorherigen Trocknungsprozess direkt in den Granulatkonditionierer zugeführt werden kann, um das Überkorn zu zerkleinern.

In einer bevorzugten Ausführungsform wird die Spaltbreite des Granulatkonditionierers so eingestellt, dass die Spaltbreite im Wesentlichen der größten Korngröße entspricht, die für das zu erzeugende Granulat gewünscht ist, so dass das Granulat mit Korngrößen kleiner als die Spaltbreite im Wesentlichen unzerkleinert den Granulatkonditionierer passiert, während Granulate mit Korngrößen, die größer als die eingestellte Spaltbreite sind, zerkleinert werden. Dadurch wird der Feinanteil, der möglicherweise in der weiteren Verarbeitung störend wirken kann, nicht wesentlich vergrößert, wobei gleichzeitig aber der unerwünschte Überkornanteil deutlich reduziert wird.

Besonders bevorzugt wird die Spaltbreite des Granulatkonditionierers derart gewählt, dass 95% des den Granulatkonditionierer verlassenden Granulates eine Korngröße von weniger als 1200 µm, vorzugsweise von weniger als 1000 µm und besonders bevorzugt von weniger als 700 µm hat.

Das so konditionierte Material kann anschließend einem Trockner übergeben werden, in dem die Trocknung auf die gewünschte Verarbeitungsfeuchte stattfindet. Anschließend können die optimierten Granulate noch von dem nun nur noch geringen Anteil an Überkorn und üblichen Materialabplatzungen von Behälterwänden durch Klassierung, beispielsweise durch eine Schutzsiebung befreit werden und dann direkt weiterverarbeitet werden.

Es hat sich gezeigt, dass das Verfahren weiterverbessert werden kann, wenn der Spalt im Querschnitt einen konischen Spaltabschnitt oder sogar mehrere hintereinander angeordnete konische Spaltabschnitte hat.

Am besten besteht der Granulatkonditionierer aus einer Scheibenanordnung mit mindestens einer, vorzugsweise zwei rotierenden Scheiben, die einen konischen Zerkleinerungsraum vom radial inneren Ende zum radial äußeren Ende der Scheiben ausbilden, den sogenannten Zerkleinerungsspalt. Durch die Verstellung des Spaltabstandes zwischen den Scheiben kann die Austrittsgröße der Granulate eingestellt werden. Die granulierten, feuchten Granulate werden dabei im Zentrum der Scheibe, vorzugsweise durch eine Hohlwelle, aufgegeben, und durch die rotierenden Scheiben mittels Zentrifugalkräften durch die Spaltanordnung nach außen gefördert.

In einer bevorzugten Ausführungsform werden die beiden Scheiben gleichläufig zueinander rotiert, wobei die beiden Scheiben eine unterschiedliche Umfangsgeschwindigkeit aufweisen.

In einer weiteren bevorzugten Ausführungsform ist vorgesehen, dass zwischen Schritt A) und Schritt B) noch folgender Schritt C) tritt: Klassieren des in Schritt A) erzeugten Granulats nach dem Kriterium Korngröße, wobei nur der Teil des Granulats mit der größeren Korngröße mittels Schritt B) bearbeitet wird. Dadurch kann der Durchsatz deutlich erhöht werden, da es natürlich nicht notwendig ist, die Granulate, die bereits die gewünschten Korngrößen haben, in den Granulatkonditionierer einzuführen, so dass diese dem nachfolgenden Schritt B) nicht unterzogen werden müssen.

In einer besonders bevorzugten Ausführungsform ist vorgesehen, dass nach Schritt B) der folgende Schritt D) Klassieren des in Schritt B) erzeugten Granulats nach dem Kriterium Korngröße stattfindet, wobei nur der Teil des Granulats mit der kleineren Korngröße als Verfahrensprodukt verwendet wird, wobei vorzugsweise das Verfahren diskontinuierlich oder kontinuierlich mehrmals durchgeführt wird und der Teil des Granulats mit der größeren Korngröße bei einer nachfolgenden Verfahrensdurchführung entweder in Schritt A) in den Behälter zurückgeführt oder dem in Schritt A) erzeugten Granulat zugeführt wird.

Weitere Vorteile, Merkmale und Anwendungsmöglichkeiten der vorliegenden Erfindung werden deutlich anhand der folgenden Beschreibung bevorzugter Ausführungsformen sowie den zugehörigen Figuren. Es zeigen:
Figur 1 eine schematische Darstellung eines Verfahrens des Standes der Technik,
Figur 2 eine schematische Darstellung einer ersten erfindungsgemäßen Ausführungsform des Verfahrens,
Figur 3 eine schematische Darstellung einer zweiten erfindungsgemäßen Ausführungsform des Verfahrens,
Figur 4 eine schematische Darstellung einer dritten erfindungsgemäßen Ausführungsform des Verfahrens,
Figur 5 eine schematische Darstellung einer vierten erfindungsgemäßen Ausführungsform des Verfahrens,
Figur 6 eine schematische Darstellung einer fünften Ausführungsform des Verfahrens,
Figur 7 eine schematische Darstellung einer sechsten Ausführungsform des erfindungsgemäßen Verfahrens,
Figur 8 eine schematische Darstellung einer siebten Ausführungsform des erfindungsgemäßen Verfahrens.

Figur 1 zeigt das bekannte Herstellungsverfahren und wurde bereits beschrieben.

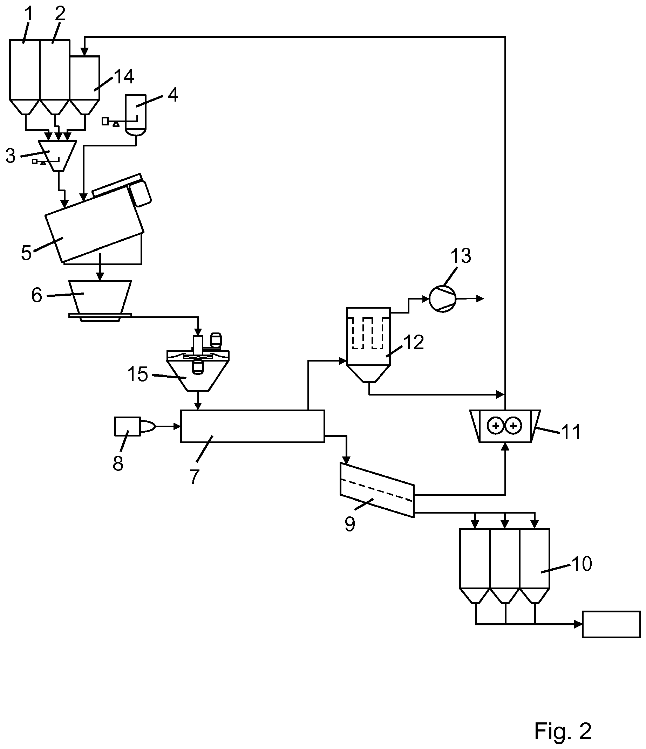

In Figur 2 ist eine schematische Darstellung einer ersten erfindungsgemäßen Ausführungsform des Verfahrens gezeigt.

Soweit möglich, wurden für gleiche Elemente die gleichen Bezugszeichen verwendet. Man erkennt, dass sich die in Figur 2 gezeigte Ausführungsform von dem Verfahren des Standes der Technik dadurch unterscheidet, dass das aus dem Zwischenbehälter 6 austretende Granulat nun nicht mehr direkt dem Fließbetttrockner 7 zugeführt, sondern zunächst dem Granulatkonditionierer 15 zugeführt wird. Dieser ist somit zwischen dem Granuliermischer und dem Fließbetttrockner 7 positioniert und verarbeitet den gesamten vom Mischer stammenden Massenstrom. Das nach wie vor vorhandene Überkorn wird wie im Stand der Technik nach dem Trockner abgesiebt, zerkleinert und in den Granulierprozess zurückgeführt. Allein durch die Verwendung des Granulatkonditionierers kann der Anteil an Überkorn auf 5 bis 10%, das heißt auf 1/5tel bis 1/10tel des Anteils, der im Stand der Technik üblich ist, reduziert werden. Man erkennt sofort, dass damit enorme Energieeinsparungen möglich sind, da nun nur noch ein kleiner Anteil des Überkorns in System zirkuliert, das heißt dem Granuliermischer erneut zugeführt werden muss.

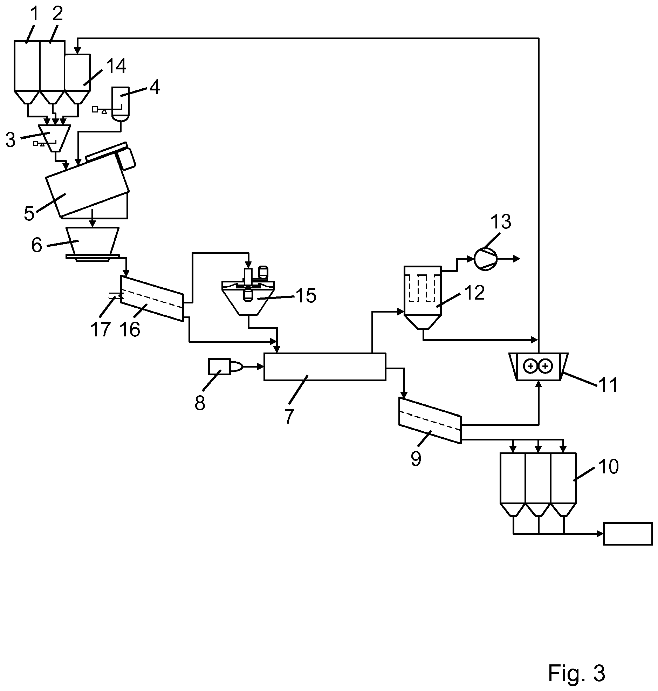

In Figur 3 ist eine schematische Darstellung einer zweiten erfindungsgemäßen Ausführungsform des Verfahrens gezeigt. Diese unterscheidet sich von dem in Figur 2 gezeigten Verfahren dadurch, dass nach dem Zwischenbehälter 6 ein Klassierer 16, in der gezeigten Ausführungsform in Form eines Siebdeckes, welches zudem eine elektrische Heizung 17 aufweist, ausgebildet ist. Mit Hilfe des Klassierers 16 kann Gutkorn und Überkorn getrennt werden, wobei nur das Überkorn, das 40 bis 50% des Granulats ausmachen kann, dem Granulatkonditionierer 15 zugeführt wird, während das Gutkorn (50 bis 60%) direkt dem Fließbetttrockner 7 zugeführt wird. Dem Fließbetttrockner 7 wird somit eine Mischung aus gesiebtem Gutkorn und im Granulatkonditionierer zerkleinertem Überkorn zugefügt. Nach dem Trockner erfolgt dann eine erneute Trennung nach Korngrößen in einem Klassierer 9, beispielsweise durch Siebung in einem Siebklassierer, und das noch vorhandene Überkorn wird im Brecher 11 zerkleinert und zusammen mit dem Staub aus dem Trockner in den Granulierprozess zurückgeführt, wie im Zusammenhang mit Figur 2 beschrieben. Gegenüber dem in Figur 2 gezeigten Verfahren wird hier die Ausbeute weiter erhöht, da der Granulatkonditionierer nur mit halbem Massenstrom belastet wird. Alternativ kann hier auch eine kleinere Maschine zum Einsatz kommen. Allerdings wird hier ein zusätzliches beheiztes Sieb gebraucht.

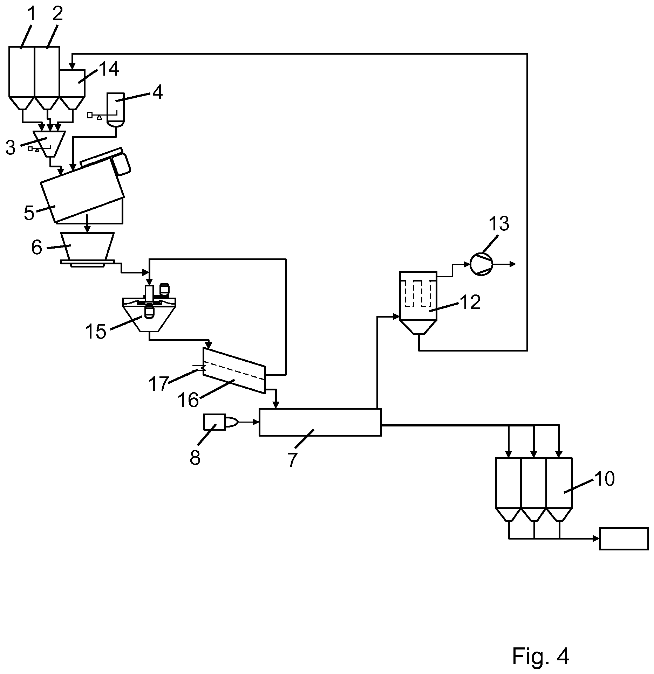

In Figur 4 ist eine schematische Darstellung einer dritten Ausführungsform des erfindungsgemäßen Verfahrens gezeigt. Bei dieser Ausführungsform ist der Granulatkonditionierer wie in der ersten Ausführungsform nach dem Granuliermischer positioniert und verarbeitet somit den gesamten Massenstrom aus dem Mischer. Der Ausgang des Granulatkonditionierers 15 wird bei dieser Ausführungsform jedoch nicht direkt auf den Fließbetttrockner 7 gegeben, sondern zunächst auf einen Klassierer 16, beispielsweise ausgeführt als Siebklassierer mit elektrischer Heizung 17. Dieses elektrisch beheizte Siebdeck trennt Gutkorn und Überkorn und das Überkorn wird direkt wieder dem Granulatkonditionierer zugeführt, so dass dem Fließbetttrockner 7 dann ausschließlich Gutkorn zugeführt wird. Nur der nach der Trocknung abgetrennte Staub, der mit Hilfe des Filters 12 abgetrennt wird, wird über das Rückgutsilo 14 dem Granuliermischer wieder zugeführt. Alternativ könnte auch der Staub dem Gutkorn wieder direkt zugeführt werden, da es für manche Anwendungsfälle von Vorteil ist, wenn eine geringe Staubmenge vorhanden ist. Diese Ausführungsform hat gegenüber dem Stand der Technik die Vorteile einer erhöhten Ausbeute, dass kein Brecher und keine Überkornrückführung in den Granuliermischer erforderlich ist, dass hinter dem Fließbetttrockner keine Nachsiebung notwendig ist, und dass auch der Granulatkonditionierer mit größerer Spaltbreite betrieben werden kann, was eine geringere Leistungsaufnahme bewirkt und einen höheren Durchsatz erlaubt. Zudem verringert sich die Verblockungsneigung.

Nachteil gegenüber den vorherigen Ausführungsformen ist, dass der Granulatkonditionierer 15 nun noch größere Massenströme verarbeiten muss, da das Überkorn aus dem Klassierer 16 direkt in den Granulatkonditionierer zurückgeführt wird und zudem das zusätzliche beheizte Sieb, das als Klassierer 16 arbeitet, notwendig ist.

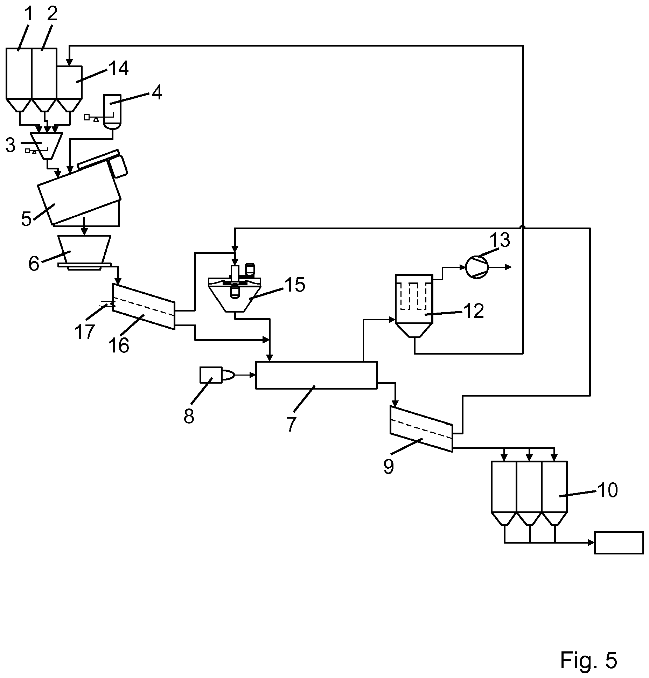

In Figur 5 ist eine vierte erfindungsgemäße Ausführungsform des Verfahrens gezeigt. Hier ist wieder direkt hinter dem Zwischenbehälter 6 ein Klassierer 16, der als Siebklassierer ausgeführt ist, mit elektrischer Heizung 17 angeordnet, welcher Gutkorn und Überkorn trennt und nur den Überkornanteil dem Granulatkonditionierer 15 zuführt. Das Verfahren entspricht im Wesentlichen der zweiten Ausführungsform, wobei hier jedoch das Überkorn mit einer Feuchte von 6% nach dem Klassierer 9 nicht wieder dem Granuliermischer über das Rückgutsilo 14 zugeführt wird, sondern stattdessen direkt dem Granulatkonditionierer 15 zugeführt wird. Der Granulatkonditionierer 15 muss somit einen Teilmassenstrom vom Mischer sowie den Überkornrückstrom vom Klassierer 9, beispielsweise ausgeführt als Siebklassierer, verarbeiten. Der aus dem Trockner abgetrennte Staub wird dem Granulierprozess über die Rückgutsilo 14 erneut zugeführt. Auch hier ist kein Brecher notwendig, da keine Überkornrückführung in den Granulierprozess erfolgt. Dafür ist in einer Ausführungsform ein zusätzliches beheiztes Sieb 16, 17 notwendig.

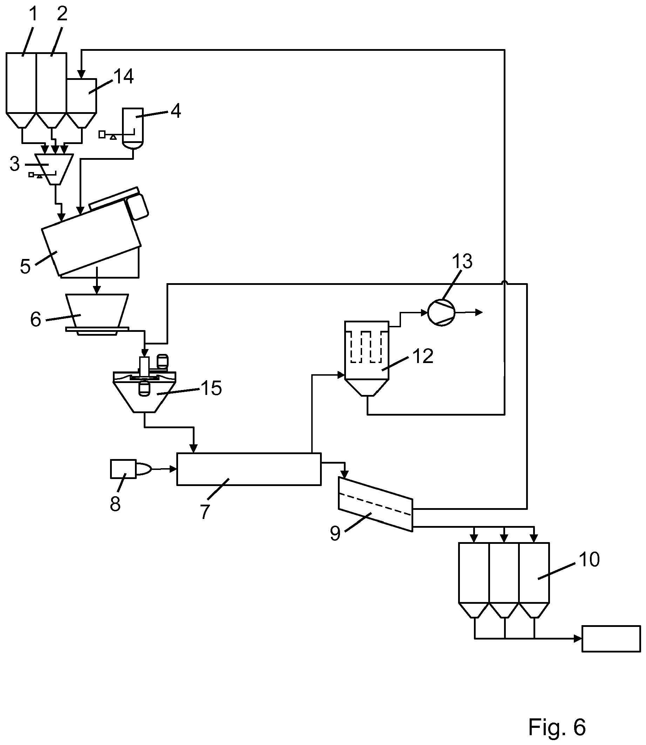

In Figur 6 ist eine fünfte Ausführungsform der vorliegenden Erfindung schematisch dargestellt. Hier ist der Granulatkonditionierer 15 wieder direkt hinter dem Granuliermischer bzw. dem Zwischenbehälter 6 positioniert und verarbeitet den gesamten Massenstrom aus dem Mischer. Zusätzlich wird der getrocknete Überkornanteil aus dem Klassierer 9 ebenfalls dem Granulatkonditionierer 15 zugeführt. Der aus dem Trockner 7 abgetrennte Staub wird dem Granulierprozess erneut zugeführt.

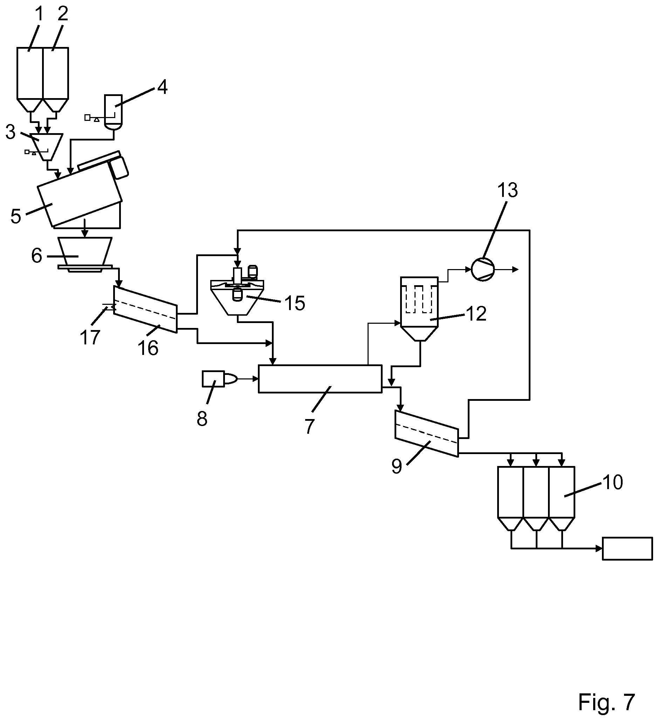

In Figur 7 ist eine sechste Ausführungsform des erfindungsgemäßen Verfahrens schematisch dargestellt. In diese Ausführungsform ist wieder ein Klassierer 16, der in der gezeigten Ausführungsform als Siebklassierer mit elektrischer Heizung 17 ausgeführt ist, hinter dem Zwischenbehälter 6 angeordnet, so dass das Überkorn vom Gutkorn getrennt wird und nur das Überkorn dem Granulatkonditionierer 15 zugeführt wird. Dem Fließbetttrockner 7 wird dann eine Mischung aus gesiebtem Gutkorn und im Granulatkonditionierer zerkleinerten Überkorn zugeführt. Nach dem Fließbetttrockner 7 erfolgt dann im Klassierer 9 eine erneute Trennung nach Korngröße und das dann noch vorhandene Überkorn wird dem Granulatkonditionierer 15 zugeführt (und nicht dem Granulierprozess wie bei der zweiten Ausführungsform). Der aus dem Trockner mit dem Luftstrom abgezogene Staub wird hier nicht mehr zurück in den Mischer geführt, sondern dem Gutkorn zur Erhöhung des Feinanteils direkt zugeführt. Der Granulatkonditionierer 15 muss somit einen Teilmassenstrom vom Mischer sowie den Überkornrückstrom vom Klassierer 9 verarbeiten. Vorteile dieses Verfahrens sind eine vereinfachte Anlagentechnik und eine Erhöhung des Feinanteils im Gutkorn zur Erzielung guter Oberflächeneigenschaften im Pressformling.

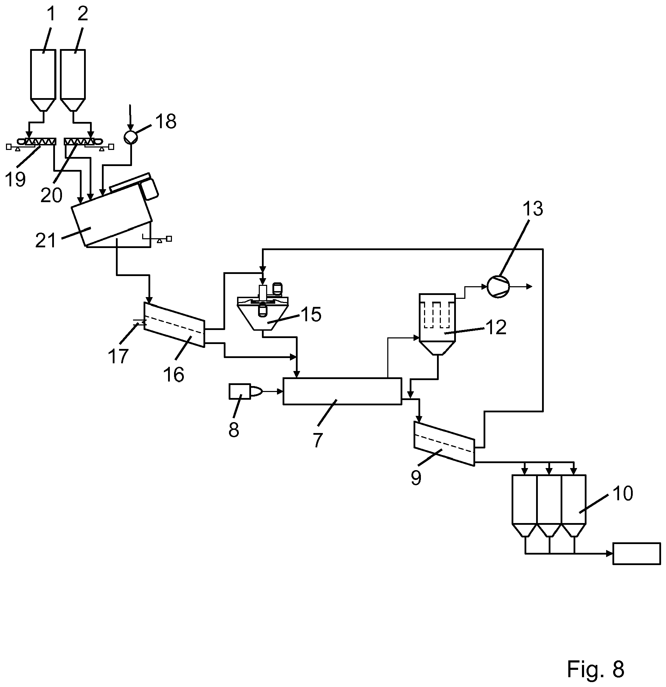

In Figur 8 ist eine siebte erfindungsgemäße Ausführungsform des Verfahrens gezeigt.

Diese entspricht im Wesentlichen der sechsten Ausführungsform, wobei hier jedoch ein kontinuierlicher Granuliermischer gezeigt ist, das heißt die Rohstoffe werden über entsprechende massenstromgeregelte Dosierorgane 19, 20, wie z.B. verwogene Förderbänder oder Dosierschnecken, kontinuierlich in den Granuliermischer 21 zugeführt und mit Wasser über den Wasseranschluss 18 vermischt. Diskontinuierlich betriebene Dosierwaagen sind nicht notwendig. Es erfolgt somit eine kontinuierliche Granulierung und ein Austrag in den Klassierer 16, der beispielsweise als Siebklassierer mit elektrisch beheiztem Sieb ausgeführt sein kann. Der weitere Aufbau entspricht der sechsten Ausführungsform.

Bei allen beschriebenen Verfahren wird im Granulierer ein feuchtes Granulat mit einer definierten Partikelgrößenverteilung aus trockenen und gemahlenen Partikelrohstoffen mit variabler Eingangsfeuchte im Bereich von 0,1 bis 11%, vorzugsweise von 0,1 bis 4% hergestellt. Die entsprechenden Rohstoffe können entweder in einem vorgeschalteten Wägebehälter 3 oder direkt in den Granuliermischer eingeführt werden.

In der Regel erfolgt während des Dosiervorgangs eine Messung der Ist-Produktfeuchte. Die Rohstoffmischung wird im Granuliermischer gemischt und homogenisiert. Für den Fall, dass nicht bereits vor dem Dosiervorgang eine Ist-Produktfeuchte gemessen worden ist, muss nun die Feuchte im Granuliermischer mittels einer feststehenden oder in den Mischer einfahrenden Feuchtesonde bestimmt werden. Aus der Feuchtemessung wird die notwendige Flüssigkeitszugabemenge bis zur Differenz der Soll-Feuchte und der Ist-Feuchte berechnet und entsprechend zugegeben. Der Granuliermischer sorgt nun für die Granulierung der pulverförmigen Rohstoffmischung durch Bildung von Flüssigkeitsbrücken zu Granulaten mit einer Sphärizität von möglichst größer als 0,8.

In einer bevorzugten Ausführungsform ist es möglich, die Granulatgrößenverteilung während des Granuliervorgangs durch fest installierte bzw. einfahrbare Messsonden zu bestimmen.

Der Granuliervorgang wird dann beendet, wenn entweder eine vorbestimmte Mischzeit abgelaufen ist, der Antriebsmotor eine bestimmte Leistung aufgenommen hat oder das Messsignal der Granulatgrößenverteilung die gewünschte Granulatgröße anzeigt.

Weiterhin kann nun die Feuchte des granulierten Produktes noch einmal bestimmt werden und für den Fall, dass sie von der gewünschten Feuchte abweicht, eine Flüssigkeitskorrekturmenge berechnet werden, die dann der nächsten Charge oder einer der nachfolgenden Chargen einfach zugefügt oder abgezogen wird. Bei einer kontinuierliche Betriebsweise des Granuliermischers kann die Korrektur der zugegebenen Flüssigkeitsmenge bereits unmittelbar für das im Granuliermischer befindliche Material erfolgen.

Selbstverständlich kann das Dosieren, Wiegen und Granulieren nicht nur diskontinuierlich, wie beschrieben, sondern auch kontinuierlich durchgeführt werden, wie in der siebten Ausführungsform beschrieben.

Das granulierte Produkt wird dann in den Zwischenbehälter 6 (nur beim diskontinuierlichen Verfahren) entleert, aus dem kontinuierlich das Granulat abgezogen wird.

Bei einigen Ausführungsformen erfolgt direkt danach die Trennung nach Korngröße. Die Klassierung kann dabei beispielsweise mittels Siebklassierung oder Stromklassierung mit dem Trennmedium Gas erfolgen. Bei Verwendung eines Siebes müssen die Sieboberflächen beheizt werden, da sonst aufgrund der hohen Feuchte die Granulate am Sieb haften beleiben. Bei der Trennung in Stromklassierern soll dabei keine wesentliche Trocknung erzielt werden.

Zumindest die Grobgutfraktion wird dem Granulierkonditionierer 15 zugeführt.

Das so konditionierte Granulat und gegebenenfalls das vorab gesiebte Granulat werden dann einem Trockner zugeführt, welcher die Feuchte auf die Verarbeitungsfeuchte reduziert.

Das in dem Verfahren erzeugte Granulat sollte einen Anteil von Korngrößen < 100 µm von weniger als 30%, vorzugsweise von weniger als 20% und am besten von weniger als 10% haben. Weiterhin sollte das granulierte Produkt einen mittleren Korngrößendurchmesser von < 1500 µm, vorzugsweise von < 1000 µm und besonders bevorzugt von < 400 µm haben.

95% des granulierten Produktes sollte eine Korngröße von weniger als 1200 µm, vorzugsweise von weniger als 1000 µm und besonders bevorzugt von weniger als 700 µm haben.

### Bezugszeichenliste

- 1): Rohstoff
- 2): Rohstoff
- 3): Wägebehälter / Dosierwaage
- 4): Wasserzuführung
- 5): Granuliermischer
- 6): Zwischenbehälter
- 7): Fließbetttrockner
- 8): Heißgaserzeuger
- 9): Klassierer
- 10): Behälter
- 11): Brecher/Aufnahme
- 12): Filter
- 13): Abluftgebläse
- 14): Rückgutsilo
- 15): Granulatkonditionierer
- 16): Siebklassierer
- 17): elektrische Heizung
- 18): Wasseranschluss
- 19): Dosierorgan
- 20): Dosierorgan
- 21): kontinuierlicher Granuliermischer

## Patentansprüche

1. Verfahren zur Erzeugung eines optimierten Granulats für die technische Keramik oder keramische Fliesen mit den Schritten
A) Erzeugen eines Granulats in einem Granuliermischer mit einem Behälter und einem Rührwerkzeug und
B) Zerkleinern zumindest eines Teiles des Granulates in einem Granulatkonditionierer, welcher zwei sich relativ zueinander bewegende Elemente hat, wobei das aus dem Granuliermischer herausgeführte Granulat dem Granulatkonditionierer ohne Feuchtigkeitszugabe oder Trocknungsprozess zugeführt wird, eine Feuchte von 10 - 15 % hat und durch einen Spalt zwischen den beiden Elementen geführt wird.

2. Verfahren nach Anspruch 1, **dadurch gekennzeichnet, dass** in Schritt B) das Granulat eine Feuchte von 11 - 13,5% und vorzugsweise von 12 - 13% hat.

3. Verfahren nach einem der Ansprüche 1 bis 2, **dadurch gekennzeichnet, dass** zwischen Schritt A) und Schritt B) der folgende
Schritt C) Klassieren des in Schritt A) erzeugten Granulats nach dem Kriterium Korngröße stattfindet, wobei nur der Teil des Granulats mit der größeren Korngröße mittels Schritt B) bearbeitet wird.

4. Verfahren nach einem der Ansprüche 1 bis 3, **dadurch gekennzeichnet, dass** nach Schritt B) der folgende
Schritt D) Klassieren des in Schritt B) erzeugten Granulats nach dem Kriterium Korngröße stattfindet, wobei nur der Teil des Granulats mit der kleineren Korngröße als Verfahrensprodukt verwendet wird, wobei vorzugsweise das Verfahren diskontinuierlich oder kontinuierlich mehrmals durchgeführt wird und der Teil des Granulats mit der größeren Korngröße bei einer nachfolgenden Verfahrensdurchführung in Schritt A) in den Behälter zurückgeführt oder dem in Schritt A) erzeugten Granulat zugeführt wird.

5. Verfahren nach Anspruch 4, **dadurch gekennzeichnet, dass** in Schritt D) die Klassierung in drei Korngrößenklassen stattfindet und der Teil mit der mittleren Korngröße als Verfahrenprodukt verwendet wird, wobei vorzugsweise das Verfahren diskontinuierlich oder kontinuierlich mehrmals durchgeführt wird und der Teil des Granulats mit den kleinsten Korngrößen und der Teil mit den größten Korngrößen bei einer nachfolgenden Verfahrendurchführung in Schritt A) in den Behälter gegeben wird.

6. Verfahren nach einem der Ansprüche 1 bis 5, **dadurch gekennzeichnet, dass** die Spaltbreite des Granulatkonditionierer derart gewählt wird, dass 95% des Verfahrensproduktes eine mittlere Korngröße < 1200 µm, vorzugsweise < 1000 µm und besonders bevorzugt < 700 µm hat.

7. Verfahren nach einem der Ansprüche 1 bis 6, **dadurch gekennzeichnet, dass** die Spaltbreite des Granulatkonditionierer derart gewählt wird, dass das Verfahrensprodukt einen Anteil von Korngrößen < 100 µm von weniger als 30%, vorzugsweise von weniger als 20% und am besten von weniger als 10% hat.

8. Verfahren nach einem der Ansprüche 1 bis 7, **dadurch gekennzeichnet, dass** der Spalt einen konischen Spaltabschnitt oder mehrere konische Spaltabschnitte hat.

9. Verfahren nach einem der Ansprüche 1 bis 8, **dadurch gekennzeichnet, dass** als Granulatkonditionierer ein Granulatkonditionierer mit zwei relativ zueinander drehbaren, im wesentlich parallel zueinander angeordneten Scheiben, mit einem Granulateinlass, durch den Granulat in einen kreisringförmigen Spalt zwischen die beiden Scheiben gebracht werden kann, verwendet wird.

10. Verfahren nach Anspruch 9, **dadurch gekennzeichnet, dass** beide Scheiben gleichläufig zueinander rotiert werden, wobei vorzugsweise die beiden Scheiben eine unterschiedliche Umfangsgeschwindigkeit aufweisen.

11. Verfahren nach einem der Ansprüche 1 bis 10, **dadurch gekennzeichnet, dass** während Schritt A) der Behälter um eine Drehachse rotiert wird, wobei vorzugsweise das Rührwerkzeug nicht zusammen mit dem Behälter gedreht wird.

12. Verfahren nach einem der Ansprüche 1 bis 11, **dadurch gekennzeichnet, dass** das Verfahren diskontinuierlich oder kontinuierlich mehrmals durchgeführt wird, dass während oder nach der Durchführung von Schritt A) die Ist-Feuchte des Granulats bestimmt wird, dass die Differenz zwischen Ist-Feuchte und einer vorbestimmten Soll-Feuchte bestimmt und daraus eine Flüssigkeitskorrekturmenge berechnet wird, wobei die Flüssigkeitskorrekturmenge bei einer nachfolgenden Durchführung des Verfahrens zusätzlich in den Granuliermischer zugegeben wird bzw. eine um die Flüssigkeitskorrekturmenge reduzierte Wassermenge zugegeben wird.

## Claims

1. A process for producing an optimised granular material for technical ceramics or ceramic tiles comprising the steps:
A) Producing a granular material in a granulating mixer having a container and a stirrer tool, and
B) Comminuting at least a part of the granular material in a granular material conditioner which has two elements which move relative to each other, wherein the granular material led out of the granulating mixer is fed to the granular material conditioner without adding moisture or a drying process has a moisture content of 10 - 15% and is passed through a gap between the two elements.

2. A process according to claim 1 **characterised in that** in step B) the granular material has a moisture content of 11 - 13.5% and preferably 12 - 13%.

3. A process according to one of claims 1 and 2 **characterised in that** between step A) and step B) there occurs the following:
Step C) classification of the granular material produced in step A) in accordance with the criterion of grain size, wherein only the part of the granular material with the larger grain size is processed by means of step B).

4. A process according to one of claims 1 to 3 **characterised in that** after step B) there occurs the following:
Step D) classification of the granular material produced in step B) in accordance with the criterion of grain size, wherein only the part of the granular material with the smaller grain size is used as the product of the process, wherein preferably the process is carried out discontinuously or continuously a plurality of times and the part of the granular material with the larger grain size in a subsequent process implementation is returned to the container in step A) or is fed to the granular material produced in step A).

5. A process according to claim 4 **characterised in that** in step D) classification into three grain size classes occurs and the part with the middle grain size is used as the product of the process, wherein preferably the process is carried out discontinuously or continuously a plurality of times and the part of the granular material with the smallest grain sizes and the part with the largest grain sizes in a subsequent process implementation is passed in step A) into the container.

6. A process according to one of claims 1 to 5 **characterised in that** the gap width of the granular material conditioner is so selected that 95% of the product of the process has a mean grain size <1200 µm, preferably <1000 µm and particularly preferably <700 µm.

7. A process according to one of claims 1 to 6 **characterised in that** the gap width of the granular material conditioner is so selected that the product of the process has a proportion of grain sizes <100 µm of less than 30%, preferably less than 20% and best less than 10%.

8. A process according to one of claims 1 to 7 **characterised in that** the gap has a conical gap portion or a plurality of conical gap portions.

9. A process according to one of claims 1 to 8 **characterised in that** the granular material conditioner used is a granular material conditioner having two discs which are rotatable relative to each other and which are arranged in substantially mutually parallel relationship, with a granular material inlet, through which granular material can be passed into an annular gap between the two discs.

10. A process according to claim 9 **characterised in that** the two discs are rotated in the same direction relative to each other, wherein preferably the two discs move at a different peripheral speed.

11. A process according to one of claims 1 to 10 **characterised in that** during step A) the container is rotated about an axis of rotation, wherein preferably the stirrer tool is not rotated together with the container.

12. A process according to one of claims 1 to 11 **characterised in that** the process is carried out discontinuously or continuously a plurality of times, that during or after performance of step A) the actual moisture content of the granular material is determined, that the difference between the actual moisture content and a predetermined target moisture content is determined and an amount of correction liquid is calculated therefrom, wherein the amount of correction liquid in subsequent implementation of the process is additionally added to the granulating mixer or an amount of water reduced by the amount of correction liquid is added.

## Revendications

1. Procédé de production d'un granulat optimisé pour la céramique technique ou pour des carreaux en céramique, avec les étapes
A) produire un granulat dans un broyeur à granuler avec un récipient et un outil d'agitation et
B) broyer au moins une partie du granulat dans un conditionneur de granulat qui comporte deux éléments qui sont en mouvement relatif l'un par rapport à l'autre, le granulat sortant du broyeur à granuler étant acheminé au conditionneur de granulat sans ajout d'humidité ni procédé de séchage, ayant un taux d'humidité de 10 - 15 % et étant conduit à travers une fente entre les deux éléments.

2. Procédé selon la revendication 1, **caractérisé en ce que**, à l'étape B), le granulat a un taux d'humidité de 11 - 13,5 % et de préférence de 12 - 13 %.

3. Procédé selon l'une des revendications 1 à 2, **caractérisé en ce que**, entre l'étape A) et l'étape B), l'étape suivante C) de classification selon le calibre de grain du granulat produit à l'étape A) est effectuée, à l'étape B), la seule partie de granulat de plus grand calibre de grain étant traitée.

4. Procédé selon l'une des revendications 1 à 3, **caractérisé en ce que**, après l'étape B), l'étape suivante D) de classification selon le calibre de grain du granulat produit à l'étape B) est effectuée, la seule partie de granulat de plus petit calibre de grain étant utilisée comme produit de procédé, le procédé étant mis en oeuvre de préférence plusieurs fois de manière discontinue ou de manière continue, et, lors d'une mise en oeuvre suivante du procédé, la partie de granulat de plus grand calibre étant réacheminée à l'étape A) dans le récipient ou est acheminée au granulat produit à l'étape A).

5. Procédé selon la revendication 4, **caractérisé en ce que**, à l'étape D), la classification est effectuée selon trois classes de calibre de grain et que la partie de calibre de grain moyen est utilisée comme produit de procédé, le procédé étant mis en oeuvre de préférence plusieurs fois de manière discontinue ou de manière continue, et, lors d'une mise en oeuvre suivante du procédé, la partie de granulat de plus petit calibre et la partie de granulat de plus grand calibre étant remises à l'étape A) dans le récipient.

6. Procédé selon l'une des revendications 1 à 5, **caractérisé en ce que** la largeur de fente du conditionneur de granulat est choisie de manière telle que 95 % du produit de procédé ont un calibre de grain moyen < 1200 µm, de préférence < 1000 µm et de manière particulièrement préférée < 700 µm.

7. Procédé selon l'une des revendications 1 à 6, **caractérisé en ce que** la largeur de fente du conditionneur de granulat est choisie de manière telle que le produit de procédé présente une partie ayant un calibre de grain < 100 µm de moins de 30 %, de préférence de moins de 20 % et le mieux de moins de 10 %.

8. Procédé selon l'une des revendications 1 à 7, **caractérisé en ce que** la fente comprend une zone conique de fente ou plusieurs zones coniques de fente.

9. Procédé selon l'une des revendications 1 à 8, **caractérisé en ce qu'**il est utilisé comme conditionneur de granulat, un conditionneur de granulat avec deux disques rotatives l'une par rapport à l'autre et disposées sensiblement parallèles l'une à l'autre, avec une entrée de granulat par laquelle le granulat peut être introduit entre les deux disques dans une fente ayant la forme d'un anneau circulaire.

10. Procédé selon la revendication 9, **caractérisé en ce que** les deux disques sont mis en rotation dans le même sens l'un par rapport à l'autre, les deux disques ayant de préférence des vitesses circonférentielles différentes.

11. Procédé selon l'une des revendications 1 à 10, **caractérisé en ce que**, pendant l'étape A), le récipient est mis en rotation autour d'un axe de rotation, l'outil d'agitation n'étant de préférence pas mis en rotation ensemble avec le récipient.

12. Procédé selon l'une des revendications 1 à 11, **caractérisé en ce que** le procédé est mis en oeuvre de préférence plusieurs fois de manière discontinue ou de manière continue, que pendant ou après la mise en oeuvre de l'étape A), le taux d'humidité actuel est déterminé, que la différence entre le taux d'humidité actuel et un taux d'humidité de consigne prédéterminé est déterminée et qu'il en est calculée une quantité de correction de liquide, la quantité de correction de liquide étant ajoutée dans le broyeur à granuler, ou une quantité d'eau réduite de la quantité de correction de liquide étant ajoutée, lors d'une mise en oeuvre suivante du procédé.
